# EUROPEAN PATENT APPLICATION

(11) **EP 2 853 899 A1**
(43) Date of publication of application: **01.04.2015**
(21) Application number: 14185722.7
(22) Date of filing: 22.09.2014
(51) Int. Cl.: G01N 35/00, G01N 35/04

(54) **Sample sorting apparatus and sample processing system**

(30) Priority: 30.09.2013 JP 2013203408
(71) Applicant: SYSMEX CORPORATION, Kobe-shi, Hyogo 651-0073 (JP)
(72) Inventor: Takai, Kei, Hyogo, 651-0073 (JP); Tatsutani, Hiroo, Hyogo, 651-0073 (JP)
(74) Representative: Hoffmann Eitle

(57) **Abstract**

A sample sorting apparatus (22) configured to transfer a sample container (T) from a sample rack (L) supporting the sample container to a storage rack (R1). The sample sorting apparatus (22) comprises a storage part configured to allow a plurality of storage racks (R1) to be placed thereon, a sample container gripper (243) configured to grip a sample container (T) supported in a sample rack (L), a movement mechanism (212, 222) configured to move the sample container gripper (243), and an identification information reader (190) provided so as to be movable together with the sample container gripper by the movement mechanism (212, 222). The identification information reader (190) is configured to read, from an identifier attached to each of the plurality of storage racks stored in the storage part, identification information for identifying the storage rack (R1).

## Description

### FIELD OF THE INVENTION

The present invention relates to a sample sorting apparatus which transfers a sample container from a sample rack on which a plurality of sample containers each containing a sample are placed. The present invention also relates to a sample processing system including the sample sorting apparatus.

### BACKGROUND

There has been known a sample sorting apparatus which, in order to test a sample such as blood, urine, body fluid, tissue, or the like collected from a subject or in order to store the tested sample, transfers a sample container containing the sample from one rack to another rack (see Japanese Laid-Open Patent Publication No. 2013-140141, for example). The apparatus described in Japanese Laid-Open Patent Publication No. 2013-140141 is configured to pull out a blood collection tube from a rack (one rack) on which a plurality of blood collection tubes are placed, and to transfer the blood collection tube onto a sorting cassette (another rack) set on a sorting bench.

In the sample sorting apparatus described above, a plurality of racks serving as transfer destinations for sample containers can be set, and for each sample, to which rack the sample is to be transferred is determined based on the kind, the attribute, and the like of the sample. Thus, to each rack serving as transfer destination, a bar code being coded identification information is attached, and the identification information of the rack is read by a bar code reader built in the sample sorting apparatus. Then, based on this identification information, the rack is identified.

### SUMMARY OF THE INVENTION

### PROBLEMS TO BE SOLVED BY THE INVENTION

In the sample sorting apparatus as described above, in order to read the bar code of each of the set plurality of racks, the bar code reader needs to be moved inside the apparatus. Therefore, the conventional sample sorting apparatus is provided with a movement mechanism dedicated to the bar code reader, resulting in a larger size of the apparatus.

The present invention has been made in view of the above circumstances. A main object of the present invention is to provide a downsized sample sorting apparatus and a downsized sample processing system capable of reading identification information of transfer destination for a sample container, with a simple configuration.

### SOLUTION TO THE PROBLEMS

In order to solve the above problem, a sample sorting apparatus according to one aspect of the present invention is a sample sorting apparatus configured to transfer a sample container from a sample rack supporting the sample container to a storage rack, the sample sorting apparatus including: storage means for allowing a plurality of storage racks to be placed thereon; sample container gripping means for gripping a sample container supported in a sample rack; a movement mechanism configured to move the sample container gripping means; and identification information reading means provided so as to be movable together with the sample container gripping means by the movement mechanism, the identification information reading means being for reading, from an identifier attached to each of the plurality of storage racks stored in the storage means, identification information for identifying the storage rack.

Accordingly, the identification information reading means can be moved by the movement mechanism which moves the sample container gripping means. Thus, a movement mechanism dedicated to the identification information reading means is not needed, and identification information in the storage means can be read with a simple configuration. Therefore, the apparatus can be downsized.

In the above aspect, the identification information reading means may be provided to the movement mechanism such that a reading face for reading the identification information faces downward. Accordingly, the identification information reading means can easily read identification information from an identifier provided on a horizontal face in the storage means.

In the above aspect, the identification information reading means may include a light source which emits light downward, and the reading face may be provided to the movement mechanism so as to be inclined relative to a horizontal direction. Accordingly, reflected light resulting from light from the light source having been totally reflected at the surface of the identifier is prevented from being received by the reading face. Thus, poor reading of identification information due to halation can be prevented.

In the above aspect, the storage means may be configured to have a plurality of storage racks placed thereon in each of a first horizontal direction and a second direction which crosses the first horizontal direction. Accordingly, the storage racks can be arranged with a high degree of freedom.

In the above aspect, the identification information reading means may be provided so as to be movable above an identifier provided on a horizontal face in the storage means, and when the identification information reading means reads identification information from the identifier, the movement mechanism may locate the identification information reading means above the identifier. Accordingly, in a case where an identifier is provided on a horizontal face of a storage rack, the identification information reading means can easily read identification information.

In the above aspect, the movement mechanism may include a vertical movement mechanism configured to move the sample container gripping means in a vertical direction, and a horizontal movement mechanism configured to move the vertical movement mechanism in a horizontal direction, and the identification information reading means may be provided to the horizontal movement mechanism. Accordingly, the vertical movement mechanism only needs to move the sample container gripping means in the vertical direction. Thus, power for the vertical movement mechanism can be reduced, and at the same time, the identification information reading means can be moved in the horizontal direction by the horizontal movement mechanism.

In the above aspect, the horizontal movement mechanism may include a first movement mechanism configured to move the vertical movement mechanism in a first horizontal direction, and a second movement mechanism configured to move the first movement mechanism in a second horizontal direction which crosses the first horizontal direction, and the identification information reading means may be mounted to the first movement mechanism. Accordingly, the identification information reading means can be moved to a desired position in the horizontal direction. For example, even in a case where identifiers are not arranged only in the first horizontal direction or the second direction, but are arranged at various positions in the horizontal direction, the identification information reading means can be moved to each identifier.

In the above aspect, the storage means may be configured to be able to be pulled out from the sample sorting apparatus, the sample sorting apparatus may further include a sensor capable of detecting pulling out and pushing in of the storage means, and when the sensor has detected that the storage means has been pulled out and pushed in again, the identification information reading means may read identification information for identifying the storage rack. Accordingly, when a storage rack has been exchanged, identification information can be read from an identifier of a newly placed storage rack.

In the above aspect, in a case where a first identifier is provided at a first position relative to a sample rack and a second identifier is provided at a second position further distanced from the sample rack than the first position, the movement mechanism may locate the identification information reading means above the second identifier, and after the identification information reading means has read identification information from the second identifier, the movement mechanism may locate the identification information reading means above the first identifier. Accordingly, in a case where an instruction to read identification information is received while the identification information reading means is located between the first position and the second position, the reading operation can be efficiently performed.

In the above aspect, when taking out a sample container from a sample rack, the movement mechanism may lower the sample container gripping means from a position higher than the identification information reading means to a position lower than the identification information reading means, and the movement mechanism may raise the sample container gripping means having held a sample container at the lower position, to be higher than the identification information reading means. Accordingly, since the sample container gripping means holds a sample container below the identification information reading means, interference and the like between the sample container gripping means and the identification information reading means during sample container holding operation can be prevented.

When storing a sample container in a storage rack, the movement mechanism may lower the sample container gripping means holding a sample container from a position higher than the identification information reading means to a position lower than the identification information reading means, and the movement mechanism may raise the sample container gripping means having released the sample container at the lower position, to be higher than the identification information reading means. Accordingly, since the sample container gripping means releases a sample container below the identification information reading means, interference and the like between the sample container gripping means and the identification information reading means during sample container releasing operation can be prevented.

A sample processing system according to another aspect of the present invention includes: the sample sorting apparatus according to the above aspect; and a sample processing apparatus configured to perform processing on a sample contained in a sample container.

### ADVANTAGEOUS EFFECTS OF THE INVENTION

According to the sample sorting apparatus and the sample processing system of the present invention, identification information of a rack can be read with a simple configuration.

### BRIEF DESCRIPTION OF THE DRAWINGS

FIG. 1 is a schematic diagram showing a structure of a sample processing system according to an embodiment;
FIG. 2A is a perspective view showing a structure of a sample container;
FIG. 2B is a perspective view showing a structure of a sample rack;
FIG. 3 is a perspective view showing an internal structure of a sample sorting apparatus according to the embodiment;
FIG. 4A is a plan view showing a tray on which one archive rack is set;
FIG. 4B is a plan view showing a tray on which two archive racks are set;
FIG. 5 is a schematic diagram showing a structure of the inside of the sample sorting apparatus according to the embodiment, viewed from above;
FIG. 6A is a schematic perspective view showing a structure of a supporter of a container conveyor;
FIG. 6B is a schematic perspective view showing a structure of a supporter of the container conveyor;
FIG. 7A is a schematic front view showing structures of supporters of the container conveyor;
FIG. 7B is a schematic side view showing structure of the supporters of the container conveyor;
FIG. 8 is a side view of the supporters for describing operation of gripping a sample container by a gripper;
FIG. 9 is a schematic perspective view showing a structure of a raising/lowering part;
FIG. 10 is a block diagram showing a general configuration of the sample sorting apparatus according to the embodiment;
FIG. 11 is a flow chart showing the flow of operation of the sample sorting apparatus according to the embodiment;
FIG. 12 is a partial plan view of a storage part for describing an order of reading rack IDs;
FIG. 13 is a schematic diagram for describing sample transfer operation; and
FIG. 14 is a schematic diagram for describing rack ID reading operation to be performed for a tray on which two archive racks are placed.

### DETAILED DESCRIPTION OF THE PREFERRED EMBODIMENTS

Hereinafter, preferred embodiments will be described with reference to the drawings.

### [Structure of sample processing system]

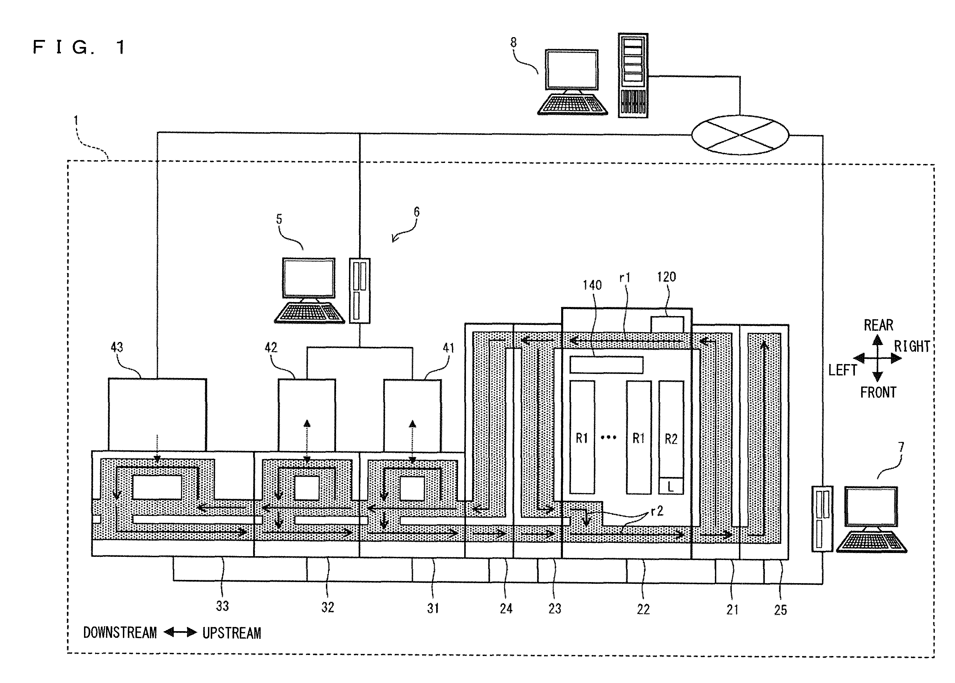

FIG. 1 is a schematic diagram showing a structure of a sample processing system according to the present embodiment.

A sample processing system 1 according to the present embodiment includes a loading unit 21, a sample sorting apparatus 22, a relay unit 23, a relay unit 24, a collection unit 25, transporting units 31 to 33, a blood cell analyzer 6, a smear preparing apparatus 43, and a transport controller 7. The blood cell analyzer 6 includes an information processing unit 5, and measurement units 41 and 42. The sample processing system 1 is communicably connected to a host computer 8 via a communication network.

The loading unit 21, the sample sorting apparatus 22, the relay units 23 and 24, the collection unit 25, and the transporting units 31 to 33 are arranged in a line in the left and right direction so as to allow a sample rack L to be transported therebetween, and adjacent units/apparatuses are connected to each other. These units and apparatuses are each configured so as to allow a plurality of sample racks L, each capable of supporting ten sample containers, to be placed thereon. These units and apparatuses are configured so as to allow a sample rack L to be transported along arrows in FIG. 1. The sample sorting apparatus 22 is provided with a transport path r1 which transports a sample rack L leftward and a transport path r2 which transports a sample rack L rightward.

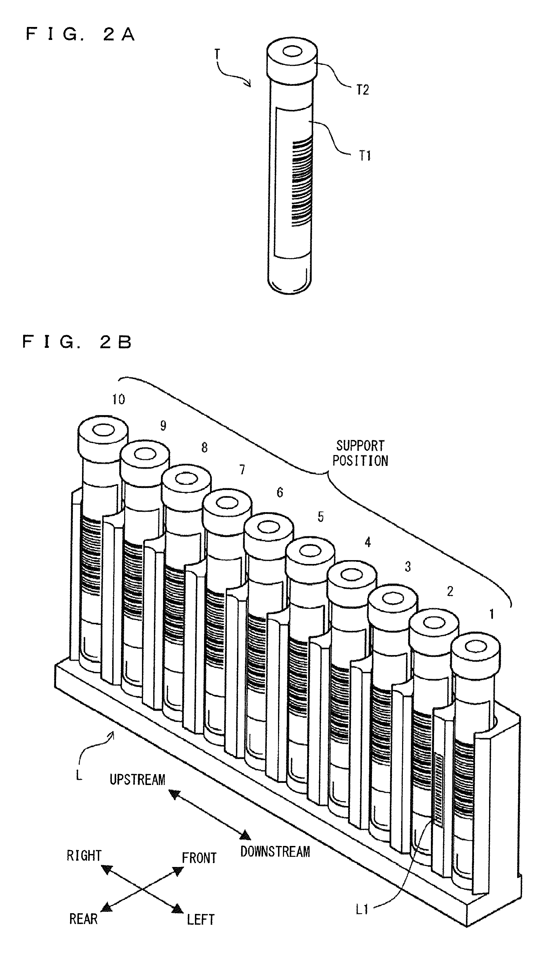

FIG. 2A is a perspective view showing a structure of a sample container T. FIG. 2B is a perspective view showing a structure of a sample rack L. FIG. 2B shows the appearance of the sample rack L supporting ten sample containers T. FIG. 2B also shows the direction along which the sample rack L is transported (front, rear, left, and right directions shown in FIG. 1).

With reference to FIG. 2A, each sample container T is a tubular container made of glass or synthetic resin having translucency, and the upper end thereof is open. To a side surface of the sample container T, a bar code label T1 is attached. On the bar code label T1, a bar code including a sample ID is printed. The sample container T contains a whole blood sample collected from a patient, and its opening at the upper end is sealed with a rubber cap T2.

With reference to FIG. 2B, a bar code label L1 is attached to a side surface on the rear side of the sample rack L. On the bar code label L1, a bar code including a rack ID is printed. In the sample rack L, support portions capable of vertically supporting ten sample containers T are formed. Hereinafter, for convenience, the positions of the support portions are respectively referred to as support positions 1 to 10 from downstream to upstream in the transport direction.

With reference back to FIG. 1, when starting measurement of samples, first, a user sets sample containers T each containing a sample on a sample rack L. The user places this sample rack L in the loading unit 21. The sample rack L placed in the loading unit 21 is transported rearward, to be sent out to the sample sorting apparatus 22.

The sample sorting apparatus 22 includes a bar code unit 120 therein. The sample sorting apparatus 22 detachably supports six archive racks R1 and one sorting rack R2. To the rear of the archive racks R1, a buffer rack 140 is fixedly provided to the housing of the sample sorting apparatus 22. As described later, the buffer rack 140, the archive racks R1, and the sorting rack R2 are each provided with a plurality of support portions each configured to support a sample container T. To the front of the sorting rack R2, a space for setting sample racks L is provided. In this space, five sample racks L are set.

The sample sorting apparatus 22 first performs a process by means of the bar code unit 120, with respect to a sample rack L having been sent out from the loading unit 21 to the sample sorting apparatus 22. Specifically, the bar code unit 120 reads the rack ID from the bar code label L1 of the sample rack L. The bar code unit 120 detects support positions at which the sample containers T are supported in the sample rack L. The bar code unit 120 reads the sample ID from the bar code label T1 of each sample container T. The sample sorting apparatus 22 transmits each sample ID read by the bar code unit 120, to the host computer 8 via the transport controller 7. Based on a measurement order set for each sample, an analysis result of the sample, and the like, the host computer 8 creates information (hereinafter, referred to as "transfer information'') for transferring each sample container T in the sample sorting apparatus 22. Then, the sample sorting apparatus 22 receives transfer information from the host computer 8 via the transport controller 7.

Subsequently, in accordance with the received transfer information, the sample sorting apparatus 22 transfers each sample container T supported in the sample rack L, to corresponding one among the buffer rack 140, the archive racks R1, the sorting rack R2, and the sample racks L placed to the front of the sorting rack R2. Moreover, the sample sorting apparatus 22 transfers a sample container T supported in the buffer rack 140 to the sample rack L as appropriate. Then, this sample rack L is sent out to the relay unit 23.

In a case where the sample rack L having sent out from the sample sorting apparatus 22 to the relay unit 23 is to be transported leftward, the sample rack L is sent out to the relay unit 24. In a case where the sample rack L is to be transported rightward, the sample rack L is transported forward in the relay unit 23, and then sent out to the sample sorting apparatus 22. The sample rack L having been sent out from the relay unit 23 to the relay unit 24 is transported forward in the relay unit 24, and then sent out to the transporting unit 31.

Each of the transporting units 31 to 33 transports a sample rack L sent out from the upstream side, in accordance with an instruction from the transport controller 7. Specifically, each of the transporting units 31 to 33 transports, in a case where processing is to be performed in its corresponding unit/apparatus, the sample rack L sent out from the upstream side, rearward to a front position facing to the corresponding unit/apparatus. In a case where process is not to be performed in the measurement unit 41, 42, the transporting unit 31, 32 causes the sample rack L sent out from the upstream side to advance leftward, and sequentially sends it out to its downstream transporting unit.

Each of the measurement units 41 and 42 takes a sample container T out of the sample rack L transported to its front position. Each of the measurement units 41 and 42 measures the sample contained in this sample container T. The information processing unit 5 receives measurement data of the sample from the measurement unit 41, 42 and analyzes the measurement data. The information processing unit 5 generates an analysis result including analysis values of measurement items. Further, the information processing unit 5 is communicably connected to the host computer 8, and transmits the analysis result to the host computer 8.

The smear preparing apparatus 43 aspirates, at its front position, a sample from the sample container T supported in the sample rack L. The smear preparing apparatus 43 prepares a smear of the aspirated sample. The smear preparing apparatus 43 is communicably connected to the host computer 8. The smear preparing apparatus 43 transmits, to the host computer 8, information indicating that the smear preparation has been completed.

When the processing by each of the measurement units 41 and 42 and the smear preparing apparatus 43 has been completed, and there is no more need to perform processing on the downstream side, the sample rack L is transported forward in the transporting unit where the sample rack L is being transported. Then, the sample rack L is sent out to the upstream side by this transporting unit. In this manner, the sample rack L is sequentially transported in the upstream direction.

The sample rack L sequentially transported from the transporting units 31 to 33 to the upstream side is further transported rightward by the relay unit 24 and the relay unit 23. Accordingly, the sample rack L is sent out to the sample sorting apparatus 22. The sample sorting apparatus 22 sends out, to the loading unit 21, the sample rack L sent in from the relay unit 23.

The sample rack L sent out from the sample sorting apparatus 22 to the loading unit 21 is transported rearward in the loading unit 21, to be sent out again to the sample sorting apparatus 22. Also in this case, similarly to the above, reading by the bar code unit 120 is performed. Then, the sample sorting apparatus 22 receives transfer information from the host computer 8. Then, the sample sorting apparatus 22 transfers sample containers T supported in the sample rack L in accordance with the received transfer information.

In this manner, a sample container T that needs neither retests by the measurement unit 41, 42 nor smear preparation performed by the smear preparing apparatus 43 again (hereinafter, simply referred to as "retesting") and that need not be processed in another apparatus outside the sample processing system 1 is transferred to one of the archive racks R1. A sample container T that does not need retesting but needs to be processed in another apparatus outside the sample processing system 1 is transferred to the sorting rack R2. Similarly to the above, a sample container T that needs retesting is transferred to a sample rack L as appropriate, and then, the sample container T is sent out to the relay unit 23. The processing of a sample container T by the sample processing system 1 is completed, by the sample container T being transferred to one of the archive racks R1 or the sorting rack R2.

When a sample rack L from which all the supported sample containers T have been transferred and which has become empty is sent out to the relay unit 23, the sample rack L is transported forward in the relay unit 23, and then sent out to the sample sorting apparatus 22. The sample sorting apparatus 22 sends out, to the loading unit 21, the empty sample rack L sent in from the relay unit 23. The empty sample rack L sent out to the loading unit 21 is transported rightward by the loading unit 21, to be sent out to the collection unit 25. Then, this sample rack L is transported rearward in the collection unit 25, to be stored in the collection unit 25. Then, transportation of the sample rack L is completed.

The transport controller 7 is communicably connected to the loading unit 21, the sample sorting apparatus 22, the relay units 23 and 24, the collection unit 25, and the transporting units 31 to 33. The transport controller 7 controls transport operations of a sample rack L performed by those. The host computer 8 stores a measurement order of each sample, an analysis result of the sample, and the like, associated with the sample ID thereof. The host computer 8 retains a rule for transferring a sample container T in the sample sorting apparatus 22.

### [Structure of sample sorting apparatus]

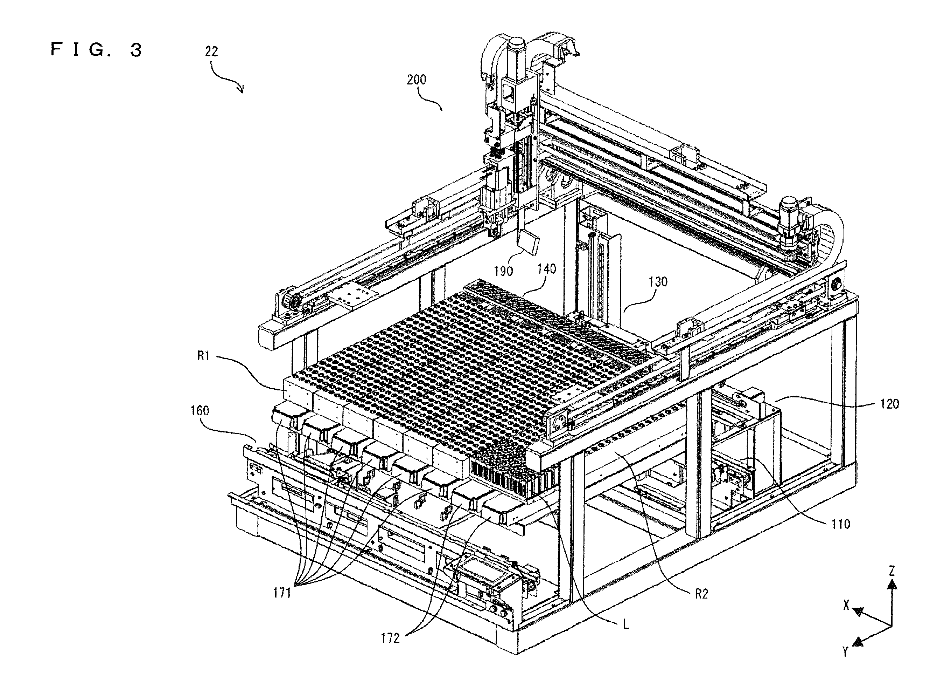

FIG. 3 is a perspective view showing an internal structure of the sample sorting apparatus 22. The positive direction of the X-axis, the positive direction of the Y-axis, and the positive direction of the Z-axis shown in FIG. 3 correspond to the left direction, the forward direction, and the upward direction, respectively.

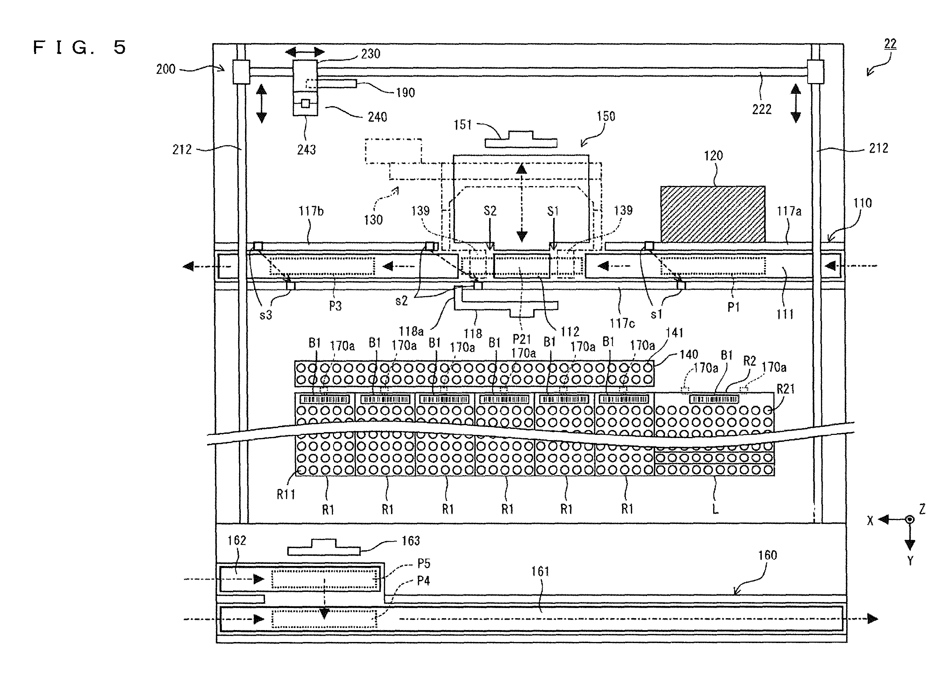

The sample sorting apparatus 22 includes a container conveyor 200, a transporter 110, a raising/lowering part 130, an empty rack stocker 150 (see FIG. 5), a transporter 160, a storage part 170, and a bar code reader 190, in addition to the bar code unit 120 shown in FIG. 1.

The container conveyor 200 conveys each sample container T within the sample sorting apparatus 22. The transporter 110 transports leftward a sample rack L sent out from the loading unit 21, along the transport path r1 (see FIG. 1). The raising/lowering part 130 moves upward a sample rack L located at a predetermined position of the transport path r1, as described later. The transporter 160 transports rightward a sample rack L sent out from the relay unit 23, along the transport path r2 (see FIG. 1).

The storage part 170 includes six trays 171, two trays 172, a mounting frame 173, and a buffer rack 140. Each of the trays 171 and 172 is mounted, slidably in the front-rear direction, to the mounting frame 173 which is fixed to the housing of the sample sorting apparatus 22. The user can pull out forward the trays 171 and 172 being in the state shown in FIG. 3, and push in the pulled-out trays 171 and 172 into the housing.

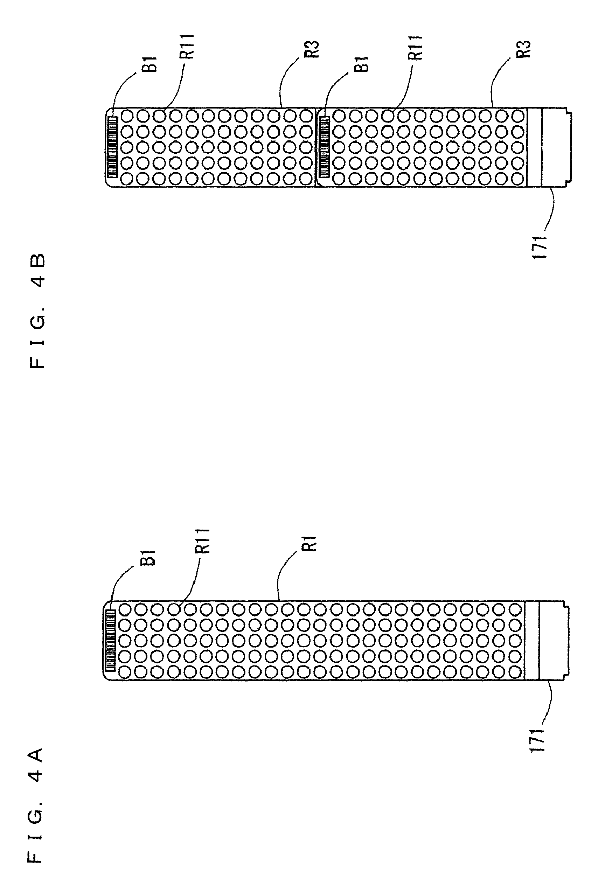

On each tray 171, one archive rack R1 can be detachably set. Alternatively, on the tray 171, two archive racks R3 can be detachably set, instead of one archive rack R1. FIG. 4A is a plan view showing a tray 171 on which one archive rack R1 is set. FIG. 4B is a plan view showing a tray 171 on which two archive racks R3 are set.

As shown in FIG. 4A, in one archive rack R1, 125 support portions R11 are formed. Each tray 171 has a rectangular shape that is long in the front-rear direction in a plan view. The tray 171 holds an archive rack R1 which similarly has a rectangular shape that is long in the front-rear direction in a plan view. In a rear portion on the upper face of each archive rack R1, a bar code label B1 is attached. On the bar code label B1, a bar code which is a coded rack ID for identifying the archive rack R1 is printed.

As shown in FIG. 4B, in one archive rack R3, 60 support portions R11 are formed. The length in the front-rear direction of the archive rack R3 is about half of that of the archive rack R1, and the length in the left-right direction of the archive rack R3 is the same as that of the archive rack R1. As shown in FIG. 4B, the tray 171 holds two archive racks R3 arranged in the front-rear direction. In a rear portion on the upper face of each archive rack R3, a bar code label B 1 is attached. On the bar code label B1, a bar code which is a coded rack ID for identifying the archive rack R3 is printed.

In one sorting rack R2, 200 support portions R21 are formed. On the trays 172, a sorting rack R2 can be detachably set, and at the same time, five sample racks L can be detachably set to the front of the sorting rack R2. The two trays 172 are configured to move in conjunction with each other in the front-rear direction. Also in a rear portion on the upper face of the sorting rack R2, a bar code label B1 having a bar code of a rack ID for identifying the sorting rack R2 is attached.

The buffer rack 140 is arranged to the rear of the six trays 171. The buffer rack 140 is fixed to the mounting frame 173. In the buffer rack 140, 60 support portions 141 are formed.

In the storage part 170, eight proximity sensors 170a are provided so as to respectively correspond to the six trays 171 and the two trays 172 (see FIG. 5). These proximity sensors 170a respectively detect whether their corresponding trays 171 and 172 are pulled out or pushed in. Also, these proximity sensors 170a respectively detect whether, in their corresponding trays 171 and 172, the archive racks R1, R3 and the sorting rack R2 are placed.

The storage part 170 as described above is at a position higher than the transporters 110 and 160. In more detail, the storage part 170 is at a position higher than the head (cap T2) of each sample container T transported by the transporters 110 and 160. Accordingly, when each of the trays 171 and 172 is pulled out forward, the tray 171 or 172 does not interfere with the transporters 110 and 160.

FIG. 5 is a schematic diagram showing a structure of the inside of the sample sorting apparatus 22, viewed from above. In FIG. 5, the raising/lowering part 130 is shown in chain lines for convenience.

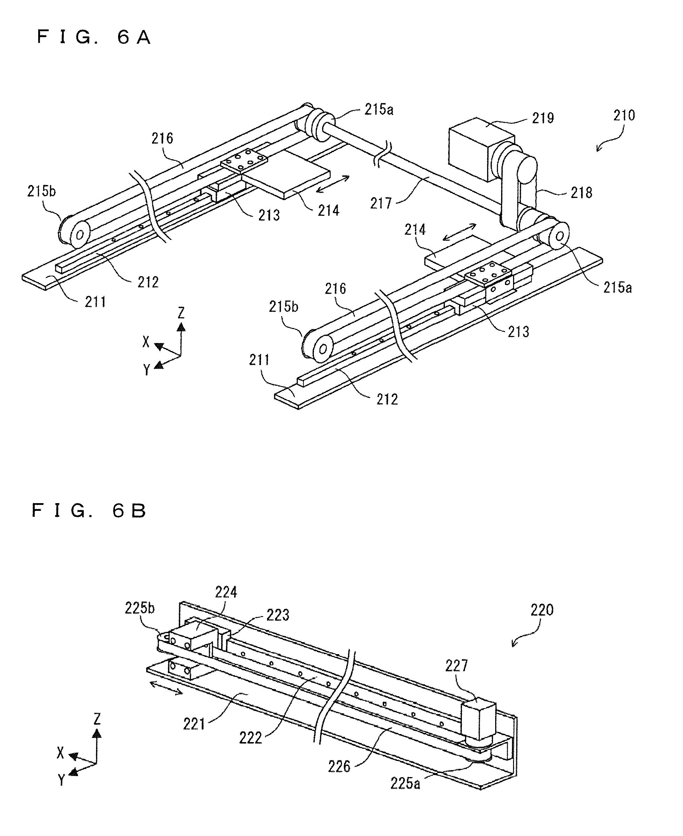

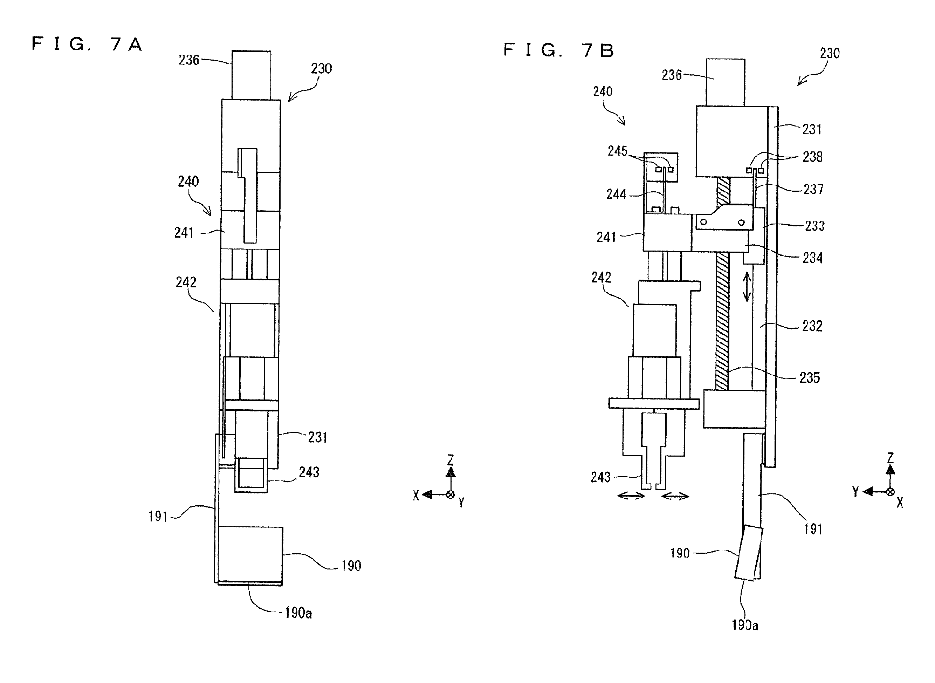

The container conveyor 200 includes two rails 212 extending in the front-rear direction, a rail 222 extending in the left-right direction, and supporters 230 and 240. The rails 212 are fixed in the housing of the sample sorting apparatus 22. The rail 222 moves in the front-rear direction along the rails 212. The supporter 230 moves in the left-right direction along the rail 222. The supporter 240 moves in the up-down direction along the supporter 230. To the lower end of the supporter 240, a gripper 243 capable of gripping a sample container T is provided. In a lower part of the supporter 230, the bar code reader 190 for reading a bar code attached to each of the archive racks R1, R3, and the sorting rack R2 described above is provided. The structure of the container conveyor 200 will be described later with reference to FIG. 6A, FIG. 6B, FIG. 7A, and FIG. 7B.

The transporter 110 includes belts 111 and 112 each extending in the left-right direction, wall parts 117a to 117c provided to the front and rear sides of the belts 111 and 112, and a rack pushing-out mechanism 118. By the belts 111 and 112 moving leftward, a sample rack L placed on the belts 111 and 112 is transported leftward.

A sample rack L sent out from the loading unit 21 is transported leftward by the belt 111, to be located at a position P1 opposed to the bar code unit 120. The sample rack L located at the position P1 is detected by a sensor s1. The bar code unit 120 detects support positions at which sample containers T are supported respectively in the sample rack L. Also, the bar code unit 120 reads the rack ID and the sample IDs.

When detection and reading by the bar code unit 120 has been completed, as described above, the sample sorting apparatus 22 transmits the read sample IDs to the host computer 8, and receives transfer information from the host computer 8. In a case where a sample container T that needs to be transferred is supported in the sample rack L, this sample rack L is transported leftward by the belts 111 and 112, to be brought into contact with a flange 118a of the rack pushing-out mechanism 118. As a result, the sample rack L is located at a position P21. The sample rack L located at the position P21 is detected by a sensor s2. On the other hand, in a case where no sample container T that needs to be transferred is supported in the sample rack L, this sample rack L is transported leftward by the belts 111 and 112, and passes the position P21, to be located at a position P3. The sample rack L located at the position P3 is detected by a sensor s3, to be sent out to the relay unit 23.

The sample rack L located at the position P21 is moved to a position (hereinafter, referred to as "transfer position") in the upward direction (the positive direction of the Z-axis) by the raising/lowering part 130. Then, in a state where the sample rack L is raised at the transfer position, a sample container T supported in sample rack L is transferred to the storage part 170 as appropriate, and a sample container T supported in the buffer rack 140 is transferred to this sample rack L as appropriate. When transfer of sample containers T relative to the sample rack L is completed, the sample rack L is located at the position P21 again by the raising/lowering part 130. Then, the sample rack L is transported leftward by the belt 112, to be located at the position P3. The sample rack L located at the position P3 is sent out to the relay unit 23.

A sample rack L from which sample containers T have been taken out and which has become empty is located at the position P21. Then, by the front face of the sample rack L being pushed by the rack pushing-out mechanism 118, the sample rack L is pushed out to the empty rack stocker 150. When the number of sample containers T supported in the buffer rack 140 has reached a predetermined value, an empty sample rack L stocked in the empty rack stocker 150 is pushed out to the position P21 by a rack pushing-out mechanism 151 as appropriate. Then, the empty sample rack L is located at a position P22 by the raising/lowering part 130. Then, into this sample rack L, a sample container T in the buffer rack 140 is transferred.

A sample rack L sent from the relay unit 23 into the transporter 160 is transported rightward by a belt 161 or a belt 162 of the transporter 160, to be located at a position P4 or a position P5. The sample rack L at the position P5 is then located at the position P4 by the rear face of the sample rack L being pushed by a rack pushing-out mechanism 163. The sample rack L located at the position P4 is transported rightward by the belt 161, to be sent out to the loading unit 21.

FIG. 6A is a schematic perspective view showing a structure of a supporter 210 of the container conveyor 200.

A pair of support plates 211 extending in the front-rear direction is provided at the left end and the right end of the sample sorting apparatus 22. The rails 212 are provided on the support plates 211, respectively. Sliders 213 are slidable in the Y-axis direction relative to the rails 212, respectively. Support members 214 are fixed to the sliders 213, respectively. Pulleys 215a and 215b are provided in the housing of the sample sorting apparatus 22, near the front end and the rear end of the rails 212. Belts 216 are each wound around the pulleys 215a and 215b, and the support members 214 are fixed to the belts 216, respectively. The pulley 215a on the right and the pulley 215a on the left are connected to each other via a shaft 217. To the shaft 217, the shaft of a motor 219 is connected via a belt 218. With this configuration of the supporter 210, the support members 214 move in the Y-axis direction, by the motor 219 being driven.

FIG. 6B is a schematic perspective view showing a structure of a supporter 220 of the container conveyor 200.

A support plate 221 extending in the X-axis direction is fixed to the pair of the support members 214 (see FIG. 6A) of the supporter 210. The rail 222 is provided on the support plate 221. A slider 223 is slidable in the X-axis direction relative to the rail 222. A support member 224 is fixed to the slider 223. Pulleys 225a and 225b are provided to the support plate 221, near the left end and the right end of the rail 222. A belt 226 is wound around the pulleys 225a and 225b, and the support member 224 is fixed to the belt 226. To the pulley 225a on the right, the shaft of a motor 227 is connected. With this configuration of the supporter 220, the support member 224 moves in the X-axis direction, by the motor 227 being driven.

FIG. 7A is a schematic front view showing structures of the supporters 230 and 240 of the container conveyor 200. FIG. 7B is a side view thereof.

First, the supporter 230 will be described. A support plate 231 extending in the Z-axis direction is fixed to the support member 224 (see FIG. 6B) of the supporter 220. A rail 232 is provided on the support plate 231. A slider 233 is slidable in the Z-axis direction relative to the rail 232. A support member 234 is fixed to the slider 233. A shaft 235 extends in the Z-axis direction. In the shaft 235, a groove like a screw thread is formed. The support member 234 is provided to the shaft 235 such that the support member 234 is movable in the Z-axis direction along the groove of the shaft 235 when the shaft 235 is rotated about the Z-axis. To the upper end of the shaft 235, the shaft of a motor 236 is connected. With this configuration of the supporter 230, the support member 234 moves in the Z-axis direction, by the motor 236 being driven.

The support member 234 is provided with a light blocking plate 237. On a member provided to the support plate 231, a pair of sensors 238 of light-blocking type is provided. When the support member 234 moves in the Z-axis direction, the light blocking plate 237 moves into the gap between the pair of sensors 238. Accordingly, it is detected that the support member 234 is located at the uppermost position (hereinafter, referred to as "upper position").

Next, the supporter 240 will be described. A support member 241 is fixed to the support member 234 of the supporter 230. Below the support member 241, a support member 242 is provided via a spring relative to the support member 241. Below the support member 242, the gripper 243 capable of gripping an upper portion of a sample container T from the Y-axis direction is provided. With this configuration of the supporter 240, the gripper 243 is movable in the Y-axis direction by means of the supporter 210, movable in the X-axis direction by means of the supporter 220, and movable in the Z-axis direction by means of the supporter 230.

On top of a member connecting the support members 241 and 242 together, a light blocking plate 244 is provided. On a member provided to the support member 241, a pair of sensors 245 of light blocking type is provided. When the gripper 243 is moved downward, if a force is applied to the gripper 243 in the positive direction of the Z-axis, the light blocking plate 244 moves into the gap between the pair of sensors 245. Accordingly, it is detected that the gripper 243 has abutted against the cap T2 or the like of a sample container T, while the gripper 243 is being lowered.

Next, the bar code reader 190 will be described. To a lower end portion of the support plate 231, a mounting member 191 is fixed. The mounting member 191 is extended further lower than the lower end of the support plate 231. To a lower end portion of the mounting member 191, the bar code reader 190 is mounted. Since the bar code reader 190 is fixed to the supporter 230 in this manner, the bar code reader 190 is moved integrally with the gripper 243 by the container conveyor 200, in the X-axis direction and the Y-axis direction. It should be noted that when the gripper 243 moves in the Z-axis direction, the bar code reader 190 does not move in the Z-axis direction.

The bar code reader 190 includes a light source which emits laser light, and a light receiver which receives reflected light. The bar code reader 190 has a rectangular parallelepiped shape. One face of the rectangular parallelepiped shape serves as a light emitting face from which laser light is emitted, and as a light receiving face which receives reflected light. Hereinafter, this face will be referred to as a reading face.

The bar code reader 190 is fixed to the mounting member 191 such that the reading face 190a faces diagonally downward. More specifically, the reading face 190a is arranged so as to be inclined such that the perpendicular of the reading face 190a is inclined forward by 10° relative to the vertical direction. Accordingly, laser light is emitted from a diagonal direction to the bar code label B1 of each of the archive racks R1, R3, and the sorting rack R2, and the irregular reflected light is received by the reading face 190a. Thus, halation which occurs when regular reflected light is received is prevented, and accuracy of reading the bar code is improved.

From the opposite face to the reading face 190a of the bar code reader 190, a cable 190b including a power line and a signal line is extended. The cable 190b is connected to a controller 321 described later. If the cable 190b is extended from any of the faces (front face, side faces, rear face) orthogonal to the reading face 190a, there is a risk that, for example, the cable 190b interferes with operation mechanisms and the like, such as the gripper 243 and the shaft 235, of the sample sorting apparatus 22. In contrast, there is no other component present above the bar code reader 190. Therefore, by extending the cable 190b from the opposite face to the reading face 190a of the bar code reader 190, interference with other components can be prevented.

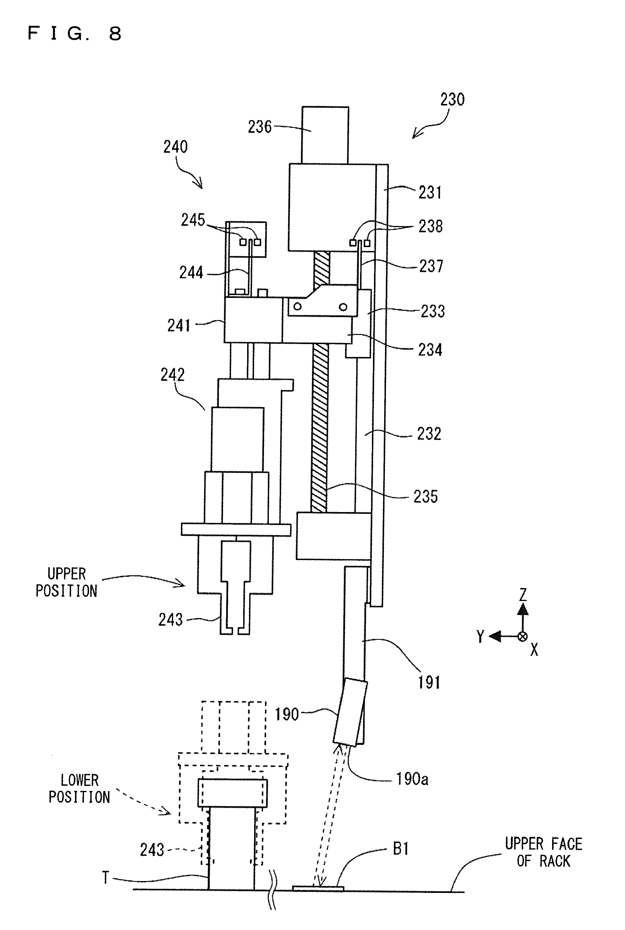

FIG. 8 is a side view of the supporters 230 and 240 for describing operation of gripping a sample container T by the gripper 243. The gripper 243 is located at the upper position (position indicated with solid lines in FIG. 8), except when the gripper 243 grips a sample container T and except when the gripper 243 releases the gripped sample container T. In a case where the gripper 243 is to grip a sample container T, or in a case where the gripper 243 is to release the gripped sample container T, when the motor 236 is driven while the gripper 243 is located above a support portion of a sample container T in a sample rack L or the buffer rack 140, or above an empty support portion of the archive rack R1, R3, the sorting rack R2, or a sample rack L, the gripper 243 is moved to a lower position below (position indicated with broken lines in FIG. 8). The upper position is a position higher than the bar code reader 190. The lower position is a position lower than the bar code reader 190. That is, when the gripper 243 is to grip a sample container T or when the gripper 243 is to release the gripped sample container T, the gripper 243 passes the height of the position of the bar code reader 190, to be moved in the Z-axis direction.

In this manner, the gripper 243 is lowered to the lower position which is lower than the bar code reader 190. At that lower position, the gripper 243 performs gripping operation or releasing operation of a sample container T. In this gripping operation or releasing operation, two facing pieces of the gripper 243 are moved away from each other in the Y-axis direction and caused to approach each other. Since the gripping operation or the releasing operation is performed at the lower position which is lower than the bar code reader 190, there is no risk of the gripper 243 interfering with the bar code reader 190 in the gripping operation or the releasing operation.

As shown in FIG. 8, in a case where a sample container T is supported in any of the buffer rack 140, the archive racks R1, R3, the sorting rack R2, and the sample racks L, the sample container T protrudes from the upper face of the rack. The protruding amount is 35 mm or less in a case of a longest sample container T. In contrast, the lower end of the bar code reader 190 is positioned at the height of 40 mm above the upper face of each of the buffer rack 140, the archive racks R1, R3, the sorting rack R2, and the sample racks L. Thus, the bar code reader 190 does not interfere with any sample container T, when moving in the horizontal direction.

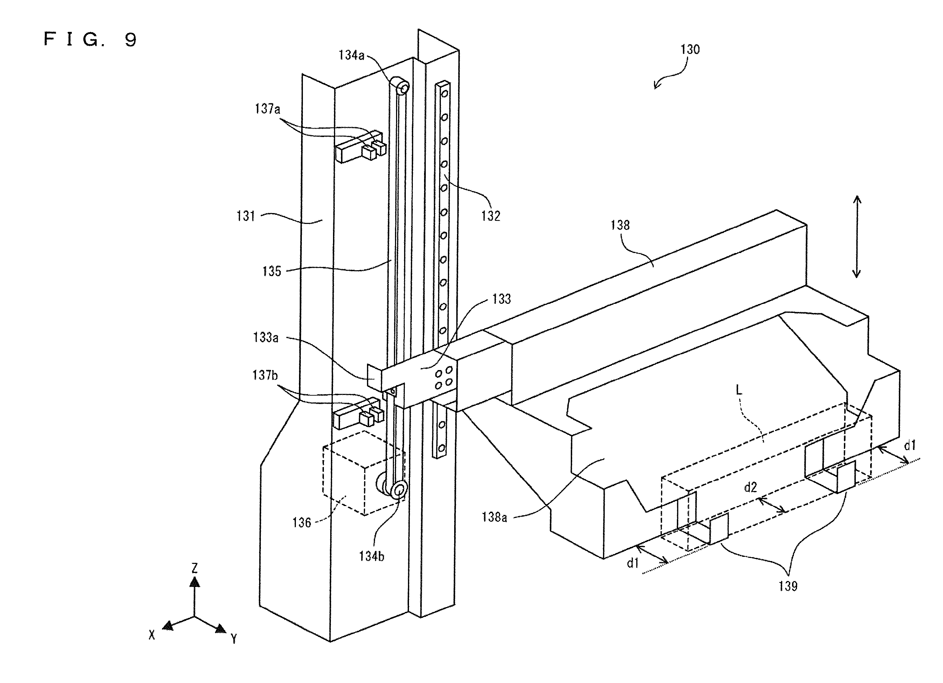

FIG. 9 is a schematic perspective view showing a structure of the raising/lowering part 130.

The raising/lowering part 130 includes: a support member 131 provided inside the sample sorting apparatus 22; a rail 132 provided on the support member 131 and extending in the up-down direction; a slider 133 slidable in the up-down direction relative to the rail 132; pulleys 134a and 134b provided at an upper portion and a lower portion of the support member 131; a belt 135 wound around the pulleys 134a and 134b; a motor 136 provided to the rear of the support member 131; a pair of sensors 137a and a pair of sensors 137b of light block type; a support body 138 provided to the slider 133; and a pair of supporters 139 provided to the front of the support body 138.

The shaft of the motor 136 is connected to the pulley 134b. When the motor 136 is driven, the pulley 134b is rotated and the belt 135 is moved. The slider 133 is fixed to the belt 135. By the belt 135 being moved, the slider 133 moves in the up-down direction along the rail 132. At the left end of the slider 133, a flange 133a is formed. When the motor 136 is driven, the flange 133a moves into the gap between the pair of sensors 137a or 137b. Accordingly, it is detected that the slider 133, the support body 138, and the supporters 139 are located at the upper end or the lower end.

Each supporter 139 is configured such that a width d1 thereof in the Y-axis direction is greater than a width d2 in the short side direction of a sample rack L. Accordingly, as shown in FIG. 8, when the support body 138 is driven upward while the horizontal faces of the supporters 139 are supporting the lower face of a sample rack L, the sample rack L is moved upward. The support body 138 is provided with an opening 138a which has a width greater than the width in the long side direction of a sample rack L and a height greater than the height in the height direction of a sample rack L supporting a sample container T. Accordingly, an empty sample rack L located at the position P21 is pushed out into the empty rack stocker 150 by the rack pushing-out mechanism 118 via the opening 138a.

In a state where the supporters 139 are raised by the raising/lowering part 130 having the above structure (in a state where the sample rack L is located at the transfer position), a sample container T supported in this sample rack L is transferred to the storage part 170 as appropriate, and a sample container T supported in the buffer rack 140 is transferred to the sample rack L. Then, when transfer of sample containers T relative to the sample rack L has been completed, the supporters 139 are lowered, and the sample rack L is transported in the positive direction of the X-axis by the belt 112. In a case where an empty sample rack L located at the position P21 is pushed out to the empty rack stocker 150, the supporters 139 are located further below. Accordingly, the empty sample rack L is pushed out in the negative direction of the Y-axis through the opening 138a of the support body 138.

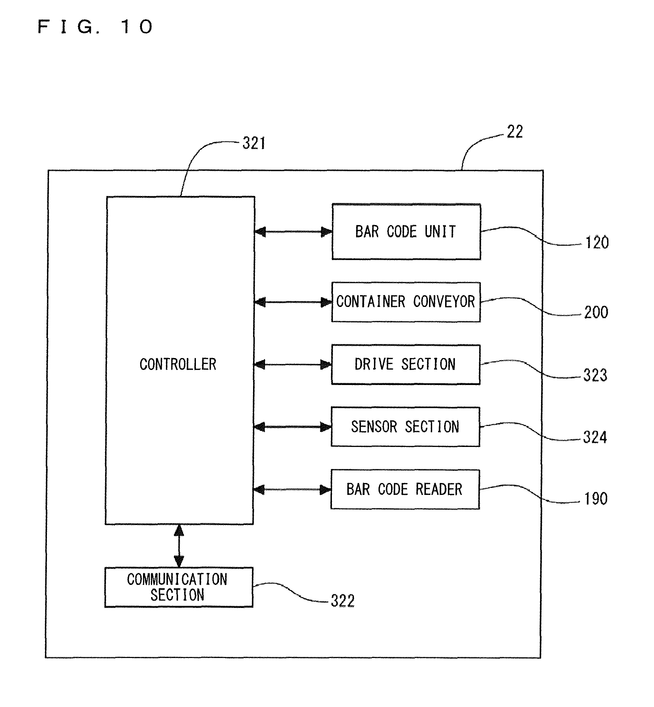

FIG. 10 is a block diagram showing a general configuration of the sample sorting apparatus 22.

The sample sorting apparatus 22 includes the controller 321, a communication section 322, the bar code unit 120, the bar code reader 190, the container conveyor 200, a drive section 323, and a sensor section 324. The controller 321 is composed of a CPU, a memory, and the like. The controller 321 controls components in the sample sorting apparatus 22, and receives signals outputted from components in the sample sorting apparatus 22. The controller 321 communicates with the transport controller 7 via the communication section 322.

The drive section 323 includes: the motors 116, 219, 227, 236 and 136; drive sources for driving the rack pushing-out mechanisms 118, 151, and 163; and a drive source for driving the gripper 243. The sensor section 324 includes the sensors s1 to s3, 238, 245, 137a, 137b, and the proximity sensors 170a.

In the present embodiment, each motor included in the drive section 323 is implemented by a servomotor. Therefore, without optical sensors and the like for each detecting which position the member or the like driven by a motor included in the drive section 323 is, these motors can be accurately controlled. It should be noted that optical sensors (for example, sensors 137a and 137b in FIG. 9) for each detecting which position the member or the like driven by a motor included in the drive section 323 is, may be used as appropriate. Accordingly, each motor can be more accurately controlled.

### [Operation of sample sorting apparatus]

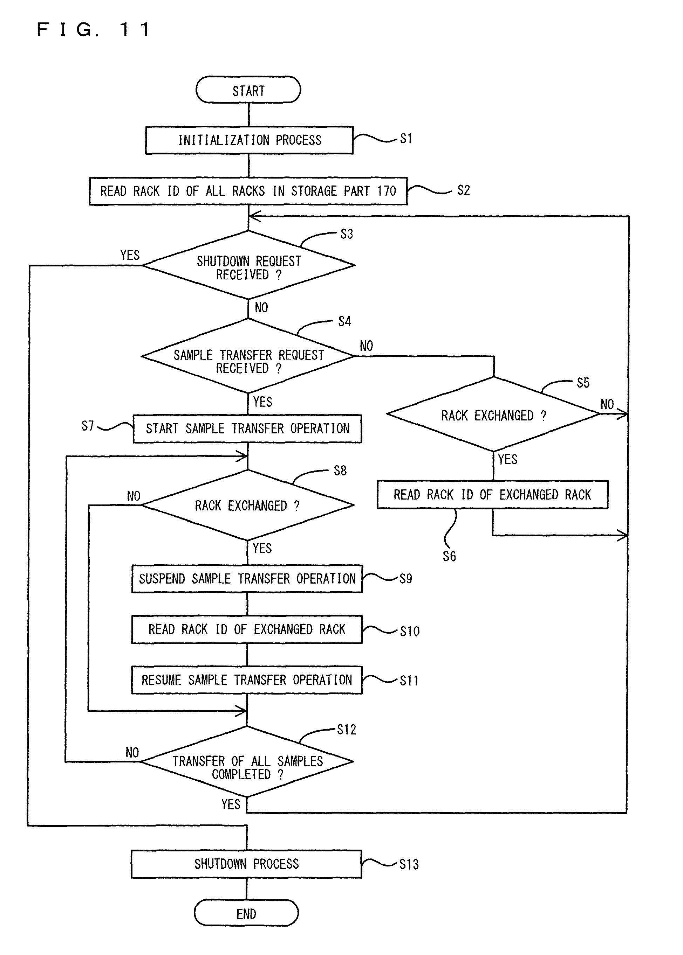

Next, operation of the sample sorting apparatus 22 will be described. FIG. 11 is a flow chart showing the flow of operation of the sample sorting apparatus.

Upon activation of the sample sorting apparatus 22, the controller 321 executes an initialization process (step S1). The initialization process includes initial setting of a control program performed by the controller 321, initial position setting of each motor in the drive section 323, and the like.

Next, the controller 321 controls the container conveyor 200 and the bar code reader 190 so as to perform rack ID reading operation for each rack in the storage part 170 (step S2). This operation is described further in detail. In the rack ID reading operation in step S2, the rack IDs of all the archive racks R1, R3, and the sorting rack R2 placed on the storage part 170 are read.

As described above, on the six trays 171, either one archive rack R1 or two archive racks R3 are placed. For each tray 171, the type of archive rack to be placed is set, such that, for example, the leftmost tray 171 is the one on which to place one archive rack R1, the second left tray 171 is the one on which to place two archive rack R3, and the like. The setting information of the type of archive rack for each tray 171 is stored in the memory of the controller 321. In accordance with the setting information, the controller 321 controls the container conveyor 200 and the bar code reader 190 so as to perform the rack ID reading operation.

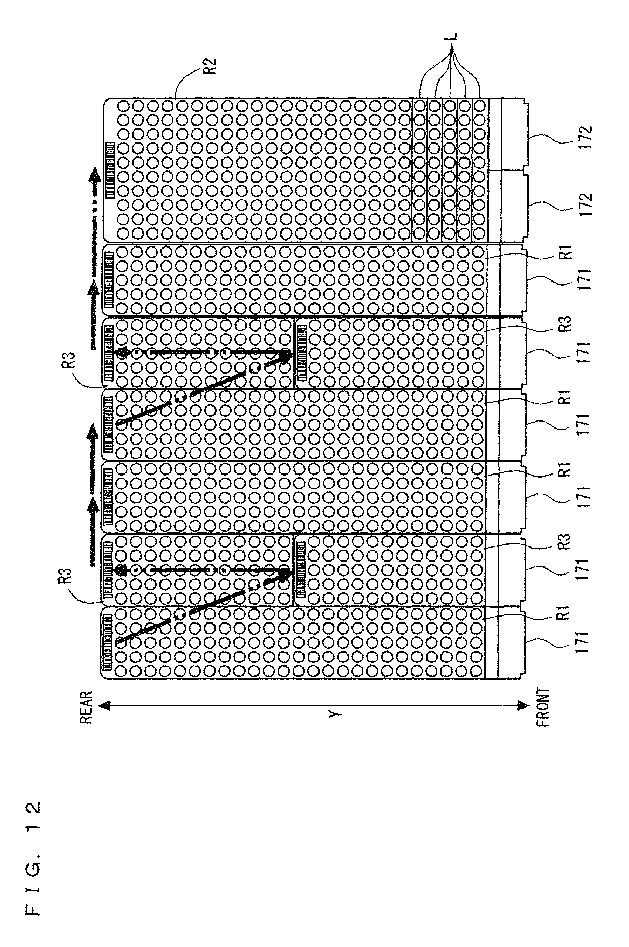

FIG. 12 is a partial plan view of the storage part 170 for describing the order of reading the rack IDs. In FIG. 12, each of the second and fifth left trays 171 is the one on which to place two archive racks R3, and each of the other trays 171 is the one on which to place one archive rack R1. In the rack ID reading operation in step S2, the bar code of each of the archive racks R1, R3 placed on the trays 171 is read from the left to the right in order. Thereafter, the bar code of the sorting rack R2 placed on the trays 172 is read. Moreover, with respect to a tray 171 on which two archive racks R3 are placed, the bar code of the front archive rack R3 is read first, and then, the bar code of the rear archive rack R3 is read.

As described above, the lower end of the bar code reader 190 is positioned at the height of 40 mm above the upper face of each of the archive racks R1, R3, the sorting rack R2, the sample racks L, and the buffer rack 140 placed on the storage part 170. Therefore, the controller 321 causes, in the rack ID reading operation, the container conveyor 200 to be moved only in the X-axis direction and the Y-axis direction. Moreover, the bar code reader 190 is arranged such that the reading face 190a is inclined (see FIG. 7B and the like). Therefore, when the bar code reader 190 is located at a position slightly rear relative to an immediately above position of the bar code to be read, the container conveyor 200 is temporarily stopped, and then, the bar code reader 190 is caused to read the rack ID at this position.

The rack ID read in this manner is stored in the memory of the controller 321, together with information of the position (information indicating on which tray 171, 172 the rack is placed).

Upon completion of the rack ID reading operation in step S2, the controller 321 determines whether a shutdown request has been received (step S3). By giving a predetermined input to an input unit, the user can give a shutdown request to the sample sorting apparatus 22. The controller 321 determines whether the shutdown request has been received. When the shutdown request has not been received (NO in step S3), the controller 321 advances the process to step S4.

In step S4, the controller 321 determines whether a sample transfer request has been received. This process is described specifically. First, a sample rack L sent out from the loading unit 21 is located at the position P1 by the belt 111. Subsequently, the bar code unit 120 detects at which support positions in the sample rack L sample containers T are supported, and the bar code unit 120 reads the sample IDs and the rack ID. The controller 321 inquires of the host computer 8 about transfer information of each supported sample container T. Then, the controller 321 determines whether transfer information of all the sample containers T for which the inquiry was made has been received. When the transfer information has been received, it is determined that the sample transfer request has been received, and when the transfer information has not been received, it is determined that the sample transfer request has not been received.

When the sample transfer request has not been received (NO in step S4), the controller 321 determines whether rack exchange has been performed (step S5). In this process, an output signal from each proximity sensor 170a is monitored. When it has been detected that any of the trays 171, 172 has been pulled out and then pushed back into the mounting frame 173, and in addition, it has been detected that the tray 171, 172 returned into the mounting frame 173 has an archive rack R1, R3, or a sorting rack R2 placed thereon, it is determined that rack exchange has been performed. Other than this, it is determined that rack exchange has not been performed. That is, even when it is detected that a tray 171, 172 has been pulled out and then pushed back into the mounting frame 173, unless it is detected that the tray 171, 172 returned into the mounting frame 173 has an archive rack R1, R3, or a sorting rack R2 placed thereon, it is determined that rack exchange has not been performed.

When it has been determined that rack exchange has not been performed (NO in step S5), the controller 321 returns the process to step S3.

On the other hand, when it has been determined that rack exchange has been performed (YES in step S5), the controller 321 controls the container conveyor 200 and the bar code reader 190 so as to perform rack ID reading operation for the tray for which rack exchange has been performed (step S6). This operation is described further in detail. In the rack ID reading operation in step S6, the rack ID is read for the tray for which the rack exchange has been detected. That is, in a case where rack exchange has been detected for a tray 171, the rack ID of the archive rack R1, R3 placed on the tray 171 is read. In a case where rack exchange has been detected for a tray 172, the rack ID of the sorting rack R2 placed on the tray 172 is read.

In a case where rack exchange has been detected for a tray 171 on which to place one archive rack R1, the bar code reader 190 is moved to the reading position for the bar code of the one archive rack R1 placed on this tray 171, to read the rack ID. In a case where rack exchange has been detected for a tray 171 on which to place two archive racks R3, the bar code reader 190 is first moved to the reading position for the bar code of the front archive rack R3 among the two archive racks R3 placed on this tray 171, to read the rack ID. Then, the bar code reader 190 is moved to the reading position for the bar code of the rear archive rack R3, to read the rack ID.

Each rack ID read in this manner is stored in the memory of the controller 321, together with information of the position (information indicating on which tray 171, 172 the rack is placed).

Upon completion of the rack ID reading operation in step S6, the controller 321 returns the process to step S3.

On the other hand, when the sample transfer request has been received (YES in step S4), the controller 321 controls the container conveyor 200 so as to start sample transfer operation (step S7).

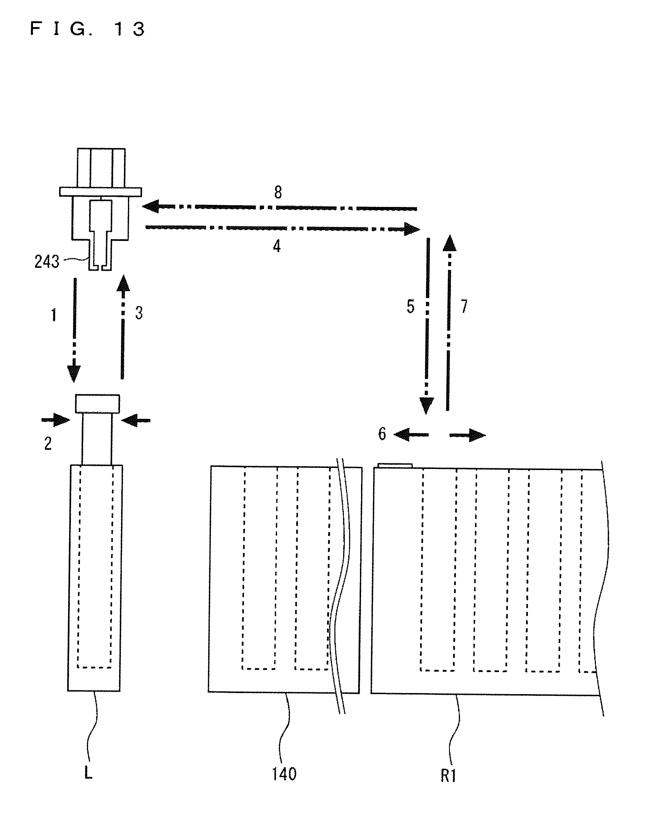

Hereinafter, the sample transfer operation will be described in detail. FIG. 13 is a schematic diagram for describing the sample transfer operation. In the sample transfer operation, the container conveyor 200 locates the gripper 243 immediately above a conveyance-target sample container T in the sample rack L located at the transfer position by the raising/lowering part 130. Next, while lowering the gripper 243, the container conveyor 200 moves the two facing pieces of the gripper 243 so as to be away from each other in the Y-axis direction, to locate the gripper 243 at the lower position ("1" in FIG. 13).

Next, the container conveyor 200 causes the two facing pieces of the gripper 243 to approach each other so as to grip the conveyance-target sample container T ("2" in FIG. 13). The container conveyor 200 raises the gripper 243 gripping the conveyance-target sample container T to the upper position, to take out the conveyance-target sample container T from the sample rack L ("3" in FIG. 13).

Further, in a state where the gripper 243 gripping the conveyance-target sample container T is located at the upper position, the container conveyor 200 moves the gripper 243 in the horizontal direction to be located immediately above an intended support portion in an intended rack among the archive racks R1, R3, the sorting rack R2, and the sample racks L ("4" in FIG. 13). Then, the container conveyor 200 lowers the gripper 243 gripping the conveyance-target sample container T from the upper position to the lower position, to insert the sample container T into the intended support portion of the intended rack ("5" in FIG. 13). In a state where the sample container T is inserted in the support portion, the container conveyor 200 moves the two facing pieces of the gripper 243 away from each other so as to release the sample container T from the gripper 243 ("6" in FIG. 13). Further, while raising the gripper 243 whose two facing pieces are away from each other, the container conveyor 200 causes the two facing pieces of the gripper 243 to approach each other in the Y-axis direction, to locate the gripper 243 at the upper position ("7" in FIG. 13).

Next, the container conveyor 200 horizontally moves the gripper 243 not gripping a sample container T, to immediately above the next conveyance-target sample container T in the sample rack L located at the transfer position (when there is no next conveyance-target sample container T, immediately above a predetermined support portion in the sample rack L at the transfer position) ("8" in FIG. 13). These operations 1 to 8 are repeated until all conveyance-target sample containers T are conveyed.

There are cases where, in the middle of the above sample transfer operation, the user exchanges a rack on a tray 171 or 172. The controller 321 determines whether rack exchange has been performed in the middle of the sample transfer operation (step S8). The determination of the rack exchange is the same as in the process of step S5.

When it has been determined that rack exchange has not been performed (NO in step S8), the controller 321 causes the sample transfer operation to be continued, and advances the process to step S12.

On the other hand, when it has been determined that rack exchange has been performed (YES in step S8), the controller 321 suspends the sample transfer operation (step S9). Here, the sample transfer operation is suspended at the time point when, after the sample container T has been inserted in a support portion in the storage part 170, the empty gripper 243 has been located at the upper position immediately above the support portion (i.e., at the time point of completion of the operation of "7" in FIG. 13). That is, the sample transfer operation is suspended in a state where the empty gripper 243 is located at the upper position above the storage part 170.

Next, the controller 321 controls the container conveyor 200 and the bar code reader 190 so as to perform the rack ID reading operation for the tray for which rack exchange has been performed (step S10). In this operation, as in step S6, the rack ID is read for the tray for which rack exchange has been detected. That is, in a case where rack exchange has been detected for a tray 171, the rack ID of the archive rack R1, R3 placed on the tray 171 is read. In a case where rack exchange has been detected for a tray 172, the rack ID of the sorting rack R2 placed on the tray 172 is read. Further, in a case where rack exchange has been detected for a tray 171 on which to place one archive rack R1, the rack ID is read from the bar code of the one archive rack R1 placed on this tray 171. In a case where rack exchange has been detected for a tray 171 on which to place two archive racks R3, the rack ID is first read from the bar code of the front archive rack R3 among the two archive racks R3 place on this tray 171, and then, the rack ID is read from the bar code of the rear archive rack R3.

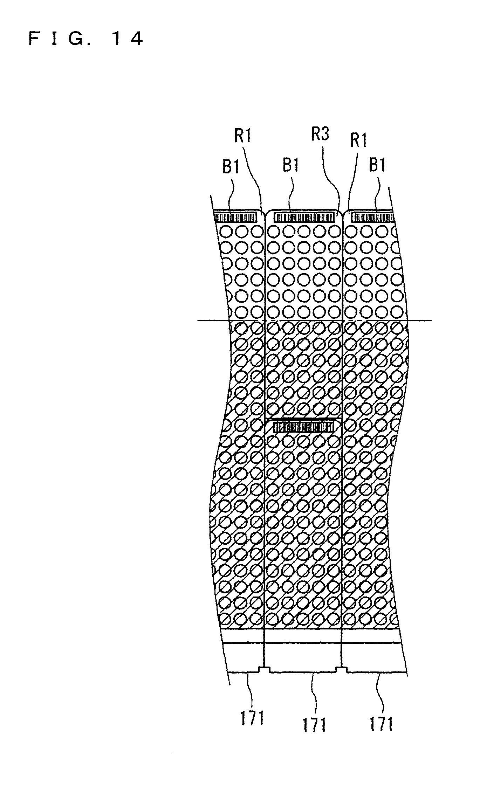

As described above, in a case where a tray 171 on which two archive racks R3 are placed is the target for rack ID reading, the bar code of the front archive rack R3 is read first, and then, the bar code of the rear archive rack R3 is read. Accordingly, movement of the bar code reader 190 associated with the rack ID reading operation is made efficient for the following reason. FIG. 14 is a schematic diagram for describing the rack ID reading operation to be performed for a tray 171 on which two archive racks R3 are placed. At the time point where the sample transfer operation is suspended, in a case where the gripper 243 is located forward relative to the center in the front-rear direction (Y-axis direction) of the rear archive rack R3 (i.e., in a case where the support portion into which a sample container T has been inserted in the storage part 170 immediately before the rack ID reading operation is present forward relative to the center in the front-rear direction of the rear archive rack R3), the position of the bar code reader 190 at that time point is near to the bar code of the front archive rack R3 than the bar code of the rear archive rack R3. That is, when the bar code reader 190 is present in the range indicated with diagonal lines in FIG. 14, the distance from the bar code reader 190 to the bar code of the front archive rack R3 is shorter than the distance from the bar code reader 190 to the bar code of the rear archive rack R3. The area (hereinafter, referred to as "forward area") forward relative to the center in the front-rear direction of the rear archive rack R3 in the storage part 170 is about three times larger than the area (hereinafter, referred to as "rear area") which is rear relative to the center in the front-rear direction of the rear archive rack R3. Thus, in the sample transfer operation, the probability of the gripper 243 conveying a sample container T with respect to a support portion in the forward area is about three times higher than the probability of the gripper 243 conveying a sample container T with respect to a support portion in the rear area. Thus, the probability of the gripper 243 (i.e., the bar code reader 190) being located in the forward area is higher than the probability of the gripper 243 being located in the rear area, and therefore, by first reading the bar code of the front archive rack R3 which is nearer to the bar code reader 190 located in the forward area, the amount of movement of the bar code reader 190 can be reduced, compared with a case where the bar code of the rear archive rack R3 is read first.

Upon completion of the rack ID reading operation as described above, the controller 321 resumes the suspend sample transfer operation (step S11). In this case, in a state where the bar code reader 190 is located at the last rack ID reading position and the gripper 243 is located at the upper position, the rack ID reading operation has been completed. Thus, the container conveyor 200 horizontally moves the gripper 243 from that state to immediately above the next conveyance-target sample container T in the sample rack L located at the transfer position (when there is no next conveyance-target sample container T, immediately above a predetermined support portion in the sample rack L at the transfer position) ("8" in FIG. 13).

The controller 321 determines whether all the sample containers T being the target of the transfer request have been transferred (step S12). When all the sample containers T being the target of the transfer request have not yet been transferred (NO in step S12), the controller 321 returns the process to step S8.

On the other hand, when all the sample containers T being the target of the transfer request have been transferred (YES in step S12), the controller 321 returns the process to step S3.

In step S3, when the shutdown request has been received (YES in step S3), the controller 321 executes a shutdown process (step S13), and completes the process.

### (Other embodiments)

In the above embodiment, a configuration has been described in which: the bar code reader 190 is fixedly mounted to the supporter 230, and the bar code reader 190 can be moved integrally with the gripper 243 by the container conveyor 200 in the X-axis direction and the Y-axis direction. However, the present invention is not limited thereto. The bar code reader 190 may be fixedly mounted to the supporter 240 directly supporting the gripper 243, and the bar code reader 190 may be moved integrally with the gripper 243 by the container conveyor 200, not only in the X-axis direction and the Y-axis direction, but also in the Z-axis direction. However, when the bar code reader 190 is configured to be movable in the Z-axis direction as above, there may arise necessity to move the bar code reader 190 in the Z-axis direction in the rack ID reading operation. Therefore, it is preferable that the bar code reader 190 is moved only in the horizontal direction in the rack ID reading operation. In a case where the bar code reader 190 is mounted to the supporter 230, compared with a case where the bar code reader 190 is mounted to the supporter 240, the output of the motor 236 for moving the supporter 240 in the Z-axis direction can be reduced.

Alternatively, the bar code reader 190 may be fixedly mounted to the supporter 220 which supports the supporter 230 so as to be movable in the Y-axis direction. In this case, the bar code reader 190 can be moved by the container conveyor 200 only in the Y-axis direction. Therefore, unlike the above-described embodiment in which the plurality of trays 171 and 172 can be pulled in and out in the Y-axis direction so that the archive racks R1, R3 and the sorting rack R2 are arranged in the X-axis direction in the storage part 170, it is necessary to configure such that the plurality of trays 171 and 172 can be pulled in and out in the X-axis direction so that the archive racks R1, R3 and the sorting rack R2 are arranged in the Y-axis direction in the storage part 170. With this configuration, the bar codes of respective racks are arranged in the Y-axis direction. Thus, even when the bar code reader 190 is movable only in the Y-axis direction, each rack ID can be read. Moreover, in a case where the bar code reader 190 is mounted to the supporter 220, compared with a case where the bar code reader 190 is mounted to the supporter 230, the output of the motor 227 for moving the supporter 230 in the X-axis direction can be reduced.

In the above embodiment, a configuration has been described in which: the plurality of archive racks R1, R3, and the sorting rack R2 are detachable from the storage part 170, and the rack ID is read from the bar code attached to each of the archive racks R1, R3, and the sorting rack R2. However, the present invention is not limited thereto. A configuration may be employed in which, like the buffer rack 140 of the storage part 170, a plurality of storage areas each having a plurality of support portions are fixedly provided to the storage part, each storage area is provided with a bar code being coded identification information for identifying the storage area, and identification information is read from each bar code by the bar code reader.

In the above embodiment, the bar code label B 1 is attached to the upper face of each of the archive racks R1, R3 and the sorting rack R2. However, the present invention is not limited thereto. The bar code label B1 may be attached to a side surface of each of the archive racks R1, R3 and the sorting rack R2. In this case, when a plurality of archive racks R3 are placed on a tray 171, a space may be provided between the two archive racks R3, the bar code reader may be moved into the space by the container conveyor 200, to read the bar code attached to a side surface between the two archive racks R3.

In the above embodiment, a configuration in which the rack ID coded into a bar code is read by the bar code reader 190 has been described. However, the present invention is not limited thereto. A configuration may be employed in which: instead of the bar code, an IC tag in which a rack ID is stored is attached to each rack, and the rack ID is read by an IC tag reader. Another configuration may be employed in which: in a case where the usage, the type, or the like of a rack is changed, new identification information corresponding to the usage or type of the rack is written by an IC tag reader-writer into the IC tag attached to the rack, and the written identification information is read by the IC tag reader-writer. Still another configuration may be employed in which: a bar code is recorded in a rewritable electronic paper, the bar code is rewritten with a bar code being new coded identification information, and the rewritten bar code is read by the bar code reader.

In the above embodiment, a configuration has been described in which, in order to transfer a sample container T, the gripper 243 grips the sample container T by sandwiching it. However, the present invention is not limited thereto. A configuration may be employed in which: the sample container T is hooked by a claw provided to the gripper 243, or the head or the like of the sample container T is aspirated with negative pressure, whereby the sample container T is gripped, and the gripped sample container T is conveyed to be transferred. Alternatively, the sample container may be gripped with a holding method other than these, whereby the gripped sample container T may be conveyed and transferred.

In the above embodiment, identification information of the bar code is obtained by use of the bar code reader 190. In a case where reading of the bar code has been failed for a tray for which rack exchange has been performed, it may be determined that no rack is placed on the tray. In this manner, the bar code reader 190 may also be used in determination of the presence/absence of a rack on a tray.

### DESCRIPTION OF THE REFERENCE CHARACTERS

- 22: sample sorting apparatus
- 110: transporter
- 120: bar code unit
- 130: raising/lowering part
- 139: supporter
- 140: buffer rack
- 141: support portion
- 160: transporter
- 190: bar code reader
- 200: container conveyor
- 243: gripper
- R1: archive rack
- R11: support portion
- R2: sorting rack
- R21: support portion
- T: sample container
- L: sample rack

## Claims

1. A sample sorting apparatus configured to transfer a sample container from a sample rack supporting the sample container to a storage rack, the sample sorting apparatus comprising:
storage means for allowing a plurality of storage racks to be placed thereon;
sample container gripping means for gripping a sample container supported in a sample rack;
a movement mechanism configured to move the sample container gripping means; and
identification information reading means provided so as to be movable together with the sample container gripping means by the movement mechanism, the identification information reading means being for reading, from an identifier attached to each of the plurality of storage racks stored in the storage means, identification information for identifying the storage rack.

2. The sample sorting apparatus of claim 1, wherein
the identification information reading means is provided to the movement mechanism such that a reading face for reading the identification information faces downward.

3. The sample sorting apparatus of claim 2, wherein
the identification information reading means includes a light source which emits light downward, and
the reading face is provided to the movement mechanism so as to be inclined relative to a horizontal direction.

4. The sample sorting apparatus of any one of claims 1 to 3, wherein
the storage means is configured to have a plurality of storage racks placed thereon in each of a first horizontal direction and a second direction which crosses the first horizontal direction.

5. The sample sorting apparatus of any one of claims 1 to 4, wherein
the identification information reading means is provided so as to be movable above an identifier provided on a horizontal face in the storage means, and
when the identification information reading means reads identification information from the identifier, the movement mechanism locates the identification information reading means above the identifier.

6. The sample sorting apparatus of any one of claims 1 to 5, wherein
the movement mechanism includes a vertical movement mechanism configured to move the sample container gripping means in a vertical direction, and a horizontal movement mechanism configured to move the vertical movement mechanism in a horizontal direction, and
the identification information reading means is provided to the horizontal movement mechanism.

7. The sample sorting apparatus of claim 6, wherein
the horizontal movement mechanism includes a first movement mechanism configured to move the vertical movement mechanism in a first horizontal direction, and a second movement mechanism configured to move the first movement mechanism in a second horizontal direction which crosses the first horizontal direction, and
the identification information reading means is mounted to the first movement mechanism.

8. The sample sorting apparatus of any one of claims 1 to 7, wherein
the storage means is configured to be able to be pulled out from the sample sorting apparatus,
the sample sorting apparatus further comprises a sensor capable of detecting pulling out and pushing in of the storage means, and
when the sensor has detected that the storage means has been pulled out and pushed in again, the identification information reading means reads identification information for identifying the storage rack.

9. The sample sorting apparatus of any one of claims 1 to 8, wherein
in a case where a first identifier is provided at a first position relative to a sample rack and a second identifier is provided at a second position further distanced from the sample rack than the first position, the movement mechanism locates the identification information reading means above the second identifier, and after the identification information reading means has read identification information from the second identifier, the movement mechanism locates the identification information reading means above the first identifier.

10. The sample sorting apparatus of any one of claims 1 to 9, wherein
when taking out a sample container from a sample rack, the movement mechanism lowers the sample container gripping means from a position higher than the identification information reading means to a position lower than the identification information reading means, and the movement mechanism raises the sample container gripping means having held a sample container at the lower position, to be higher than the identification information reading means.

11. The sample sorting apparatus of any one of claims 1 to 10, wherein
when storing a sample container in a storage rack, the movement mechanism lowers the sample container gripping means holding a sample container from a position higher than the identification information reading means to a position lower than the identification information reading means, and the movement mechanism raises the sample container gripping means having released the sample container at the lower position, to be higher than the identification information reading means.

12. A sample processing system comprising:
the sample sorting apparatus of any one of claims 1 to 11; and
a sample processing apparatus configured to perform processing on a sample contained in a sample container.
